(19) Europäisches Patentamt
European Patent Office
Office européen des brevets

(11) **EP 1 880 980 A1**

(12) **EUROPÄISCHE PATENTANMELDUNG**

(43) Veröffentlichungstag:
   **23.01.2008 Patentblatt 2008/04**

(51) Int Cl.:
   *C02F 1/46* (2006.01)          *C02F 1/48* (2006.01)
   *C02F 103/08* (2006.01)

(21) Anmeldenummer: **07014065.2**

(22) Anmeldetag: **18.07.2007**

(84) Benannte Vertragsstaaten:
   **AT BE BG CH CY CZ DE DK EE ES FI FR GB GR HU IE IS IT LI LT LU LV MC MT NL PL PT RO SE SI SK TR**
   Benannte Erstreckungsstaaten:
   **AL BA HR MK YU**

(30) Priorität: **20.07.2006 DE 102006033538**
   **20.07.2006 DE 202006011195 U**

(71) Anmelder: **Hydrotech International Ltd.**
   **Central Hong Kong (CN)**

(72) Erfinder: **Imris, Pavel**
   **17268 Boitzenburger Land (DE)**

(74) Vertreter: **Geitz, Holger**
   **Geitz Truckenmüller Lucht**
   **Patentanwälte,**
   **Kriegsstrasse 234**
   **76135 Karlsruhe (DE)**

(54) **Vorrichtung zum elektromagnetischen Entsalzen von Meerwasser**

(57)   Vorrichtung zum Entsalzen von Meerwasser als Elektrolyt, der in einem Elektrolyseur (4) eingeführt ist, in dem mit Wechselstrom bestromte Elektroden (5, 6) und bipolare Elektroden (15) versehen sind und daß der Elektrolyseur in einem Luftspalt (3) eines Elektromagneten angeordnet ist und daß der Elektromagnet mit einem frequenzgleichen Wechselstrom bestromt wird und damit die Ionen des Elektrolyts von der Trinkwasserkomponente getrennt sind **dadurch gekennzeichnet,** daß in dem Magnetkern (1) eines Elektromagneten (EM) asymetrischer Luftspalt (3) angeordnet ist, in dem ein Magnetfeldgradient vorhanden ist und daß in dem asymetrischen Luftspalt (3) mindestens ein Elektrolyseur (4) befestigt ist, in dem zwei gegenüberpositionierte und mit Dielektrikum beschichtete Entladungselektroden (5, 6) angeordnet sind und daß der Raum zwischen den Entladungselektroden (5, 6) mit Granulat (16), das aus dielektrischem Material besteht, ausgefüllt ist und daß die salzhaltige Lösung zwischen dem Granulat (16) und parallel mit der Längsachse des Elektrolyseurs (4) fließt.

FIG.1

EP 1 880 980 A1

## Beschreibung

Die Erfindung betrifft eine Vorrichtung zum Entsalzen von Meerwasser und zum Entsalzen von Salzlösungen gemäß Oberbegriff des Patentanspruches 1.

Für die Entsalzung von Meerwasser auf Trinkwasserqualität wird ein Elektromagnet eingesetzt, in dessen Magnetkern ein asymetrischer Luftspalt angeordnet ist. In diesem Luftspalt ist ein Elektrolyseur befestigt, der mit zwei ge genüberstehenden und mit einem Dielektrikum beschichteten Entladungs- elektroden versehen ist Die Entladungselektroden werden mit Hochfrequenzstrom bestromt, wobei zwischen diesen beiden mindestens eine bipolare mit Dielektrikum beschichtete Elektrode angeordnet ist und der Raum zwischen den Entladungs- und bipolaren Elektroden mit kugelartigern Granulat aus Dielektrikum ausgefüllt ist Die Wicklungen an dem Elektromagnet bestehen aus Bandkondensator und werden mit Hochfrequenzstrom bestromt.

In den Ozeanen steht eine enorme Menge an Salzwasser mit ca. 3,5 Gew.-% Salz zur Verfügung, die bis auf 0.05 Gew.-% für die wirtschaftliche Nutzung entsalzt werden muß. Gemäß dem Stand der Technik sind seit langem unterschiedliche Verfahren und Vorrichtungen zum Entsalzen von Meerwasser bekannt, die an verschiedenen Orten als Anlagen betrieben werden. Die Entsalzungstechnologie hat mit dem Verdampfungsverfahren und dem Gefrierverfahren bis zur auf Elektrodialyse oder Elektroosmose basierende Verfahren begonnen. Die Umkehrosmose ist bis zu großen Anlagen entwickelt, die mit einer komplizierten Hydraulik und Drucksystemen betrieben werden, wodurch der Energieverbrauch enorm hoch ist. Die membrantechnische Meerwasserentsalzung ist ebenfalls eine energieintensive Technologie und wird mit komplizierten Ultrafiltrations-Modulen betrieben. Die hohen Lebenszykluskosten, der niedrige Wirkungsgrad, enorm hohe Investitionen sowie teure Wartung sind wirtschaftliche Nachteile, die durch zusätzliche Forschung nicht zu beseitigen sind.

Gemäß dem Stand der Technik sind weitere Verfahren und Vorrichtungen bekannt, die mittels gleichzeitiger Einwirkung eines magnetischen und eines elektrischen Wechselfeldes die Salzkomponente von der Trinkwasserkomponente trennen. In den europäischen Patentanmeldungen Nr. 0065 490 und 0065 489 ist ein solches Verfahren veröffentlicht. In dem U.S. Patent Nr. 3,207,684 ist eine Laborvorrichtung beschrieben, die auf die elektromagnetische Methode hinweist. In der DE-OS 3521 109 A1 wurde eine galvanomagnetische Vorrichtung zur Entfernung von Ionen aus Flüssigkeit veröffentlicht. Im Magnetfeld und im elektrostatischen Feld entfernt man Ionen von Flüssigkeit, was in WO 2004/033086 A1 ausgeführt ist. In allen oben zitierten Schriften sind Vorrichtungen beschrieben, die wirtschaftlich nicht effektiv sind und deshalb in der Wirtsehaft keine Anwendung gefunden haben.

Die erste technische nutzbare Vorrichtung, die im Magnetfeld und simultan in einem elektrischen Feld betrieben wird, ist in der WO 2006/039873 A1 und im DE-GM 20 2004 015 611 U1 veröffentlicht. Die durch die Elektroden und bipolaren Elektroden fließenden Ströme sind hauptsächlich Faradaysche Ströme und nur ein Bruchteil ist dabei kapazitiver Strom. Experimentelle Resultate haben bewiesen, daß gerade der kapazitive Strom der wichtigste physikalische Parameter ist, der die Trennung von Kationen und Anionen verursacht. Faradaysche Ströme sind auf Elektrodenreaktionen zurückzuführen, was bei niedriger Stromfrequenz wirtschaftlich negative Wirkungen hat. Rein kapazitiver Strom oszillert nur in der dünnen Helmholtz-Doppelschicht, die sich an den Metallelektroden und bipolaren Elektroden befindet.

Gemäß derWO 2006/039873 A1 habendie Meßergebnisse gezeigt, in den Zellen zwischen den bipolaren Elektroden ist nur Diffusionsstrom. Diffusionsstrom in der Elektrolytlösung hat keinen Effekt auf die Trennung von Ionen. Eine Steigerung des kapazitiven Stroms führt zur Wirkungsgradverbesserung, d.h., die Kationen und Anionen werden mit größerer Kraft an die eine Seite des Elektrolyseurs geführt. Der Wirkungsgrad der in der WO 2006/039873 A1 beschriebenen Vorrichtung liegt in der Größenordnung von 12% bis 15%, was noch niedrig ist. Wenn der durch den Elektrolyseur fließende Strom rein kapazitiver Strom wäre, dann erreicht der Wirkungsgrad 60% bis 80%. Der durch Metallelektroden fließende kapazitive Strom dient zum Umladen der Helmholtz-Doppelschicht. Faradaysche Ströme sind dagegen auf Elektroden-Reaktionen beschränkt, was zur Bildung von Deckschichten auf den Elektroden führt.

Meerwasser ist eine Elektrolytlösung und deshalb ist es dieser Regel unterworfen. Gemäß der Meßergebnisse steigt die Doppelschichtkapazität bei zyklischer Voltametrie bis zu 54 $\mu F/cm^2$ . Selbstverständlich ist dieser Wert von der Stromfrequenz abhängig. Die Doppelschichtkapazität hat andere Werte, wenn der Elektrolyseur in einem Luftspalt eines Elektromagneten angeordnet ist.

Der Erfindung liegt demgemäß die Aufgabe zugrunde, eine Vorrichtung zum Entsalzen von Meerwasser zu schaffen, die mit einem wesentlich höheren Wirkungsgrad als die bisherigen obengenannten Vorrichtungen betrieben wird, um damit eine Trinkwasserbereitstellung zu wesentlich günstigeren Kosten, hauptsächlich beim Sparen von Energie, zu ermöglichen und deren Wartung günstig ist.

Die Vorrichtung zur Durchführung dieser Aufgabe besteht aus einem Elektromagnet, in dessen Magnetkern sich ein asymetrischer Luftspalt befindet, in dem ein Elektrolyseur angeordnet ist in welchem mindestens zwei gegenüberstehende mit Dielektrikum beschichtete Entladungselektroden vorhanden sind. In dem asymetrischen Luftspalt ist das Magnetfeld nicht homogen. Nach der vorliegenden Erfindung ist für eine solche Vorrichtung wesentlich, daß zwischen den zwei Entladungselektroden mindestens eine bipolare, mit Dielektrikum beschichtete Elektrode angeordnet ist und daß der Raum zwischen den Elektroden mit kugelförmigem Granulat mit höherer Dielektrizitätskonstante ausgefüllt ist.

Das Meerwasser fließt parallel mit der Längsachse des Elektrolyseurs und zwar durch die Öffnungen an den Entladungs- und bipolaren Elektroden und zwischen dem Granulat zu den Abflüssen, die an der Rückseite des Elektrolyseurs angeordnet sind.

Durch zwei Abflüsse fließt ein hochkonzentriertes Salzkonzentrat, das aus Merrwasser-Salzen besteht und aus dem dritten Abfluß der zwischen den beiden Abflüssen angeordnet ist, fließt Trinwasser heraus. Voraussetzung ist, daß das Dielektrikum aus einem Material mit großer Dielektrizitätskonstante besteht.

In dem im Elektrolyseur strömenden kapazitiven Strom sowie in dem senkrecht wirkenden Magnetfeld bekommen die Kationen und Anionen einen verstärkten magnetischen Dipol, wodurch beide elektrisch geladenen Teilchen in Richtung des steigenden Magnetfeldgradienten gezogen werden.

Die neue Vorrichtung zu seiner Durchführung wird nachfolgend anhand der zeichnerischen Darstellung von Ausführungsbeispielen näher erläutert.

Es zeigt schematisch

**Fig.1** in Rückansicht die gesamte Vorrichtung mit der Anordnung des Elektrolyseurs in dem asymetrischen Luftspalt zwischen den Polen eines Elektromagneten:

**Fig. 2** vergrößert im Querschnitt, der parallel zur Linie I-II verläuft, den zwischen den Magnetpolen angeordneten Elektrolyseur;

**Fig. 3** im Schnitt die Vorderansicht des Elektrolyseurs;

**Fig. 4** im Schnitt die Rückansicht des Elektrolyseurs;

**Fig. 5** im Querschnitt eiene Entladungselektrode mit Beschichtung aus Dielektrikum;

**Fig. 6** die Seitenansicht einer bipolaren Elektrode mit Öffnungen für den Merrwasserdurchfluß;

**Fig. 7** im Schnitt eine Ausführungsform des Bandkondensators.

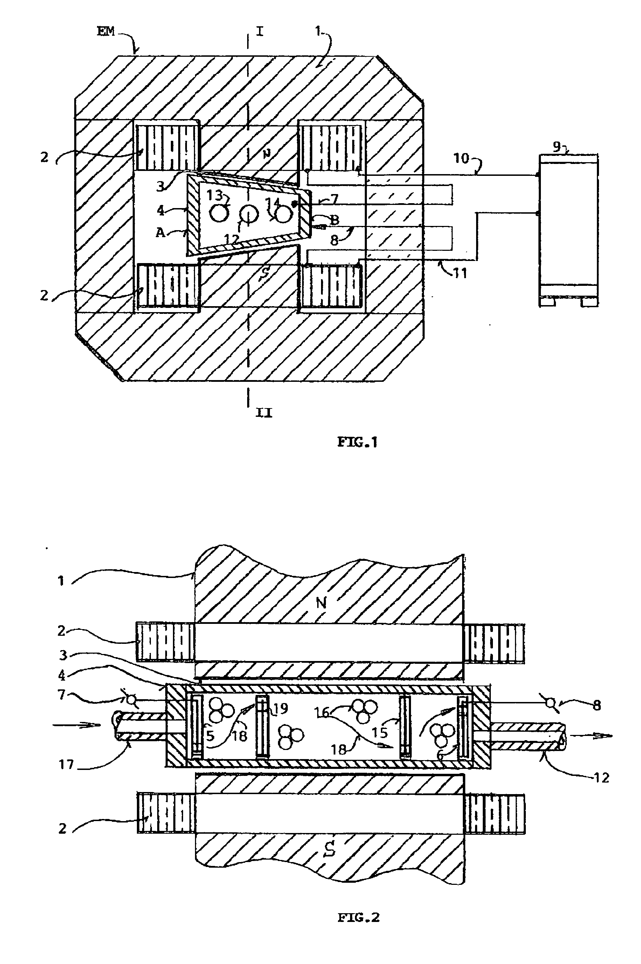

Das Grundprinzip der vorliegenden Vorrichtung ist in **Fig. 1** veranschaulicht. Die Meerwasserentsalzung findet in einem elektrischen Feld und in einem diesem senkrecht überlagerten vom Elektromagnet EM erzeugten Magnetfeld statt. Der Elektromagnet EM besteht aus einem Magnetkern **1** und Wicklungen **2**. Die Wicklungen **2** sind aus Bandkondensator Der Magnetkern **1** besteht aus einem weichen magnetischen Material, wie Transformatorbtech oder Ferrit. Für den durch Wicklungen **2** fließenden Strom ist bis 500 Hz Transformatorblech mit 1,5 T anwendbar. Für Frequenzen, die im Bereich von mehreren Kilohertz liegen, ist hochpermeables Ferrit, wie Manifer, erforderlich. In dem Magnetkern **1** ist ein asymetrischer Luftspalt **3** ausgearbeitet Die Asymetrie besteht darin, daß Breite A des Luftspalts **3** großer ist als Seite B. Breite A soll bei 50 mm liegen und Breite B bei 40 mm. Die Querschnittsflächen der Magnetpole N, S sollten in einer Größenordnung von 140 cm$^2$ sein. In dem asymetrischen Luftspalt **3** ist aus elektrisch nichtleitendem Material ein Elektrolyseur **4** plaziert, in dem zwei Entladungselektroden (in **Fig. 1** nicht dargestellt) angeordnet und durch die elektrischen Anschlüsse **7** und **8** am Hochfrequenzgenerator 9 angeschlossen sind. In **Fig. 1** sind die Entladungselektroden im Schaltkreis mit den Magnetwicklungen **2** durch Anschlüsse **10, 11** in Serie an den Hochfrequenzgenerator **9** angeschlossen. An dem Elektrolyseur **4** in **Fig. 1** ist Trinkwasserabfluß **12** veranschaulicht. Durch die Abflüsse **13** und **14** fließt aus dem Elektrolyseur das Salzkonzentrat heraus.

In **Fig. 2** ist das Grundprinzip der Vorrichtung in einem Querschnitt veranschaulicht dargestellt, der parallel zur Linie I-II **(Fig. 1** verläuft. Zwischen den Magnetpolen N, S ist der Elektrolyseur **4** angeordnet sind, in dem Elektroden **5** und **6** befestigt sind. Die Entladungselektroden **5, 6** sind im Prinzip mit einem guten Dielektrikum beschichtete Metallplatten. Die Metallplatten sind über die elektrischen Anschlüsse **7, 8** am Hochfrequenzgenerator **9** angeschlossen. Zwischen den Entladungselektroden **5,6** sind zusätzliche Bauteile angeordnet, wie z.B. eine Mehrzahl von bipolaren Elektroden **15,** die ebenfalls mit einem guten Dielektrikum beschichtet sind. Ferner ist der Raum zwischen den Entladungselektroden **5, 6** und den bipolaren Elektroden **15** mit kugerförmigem Granulat **16** ausgefüllt. Das Material des Granulats **16** ist auch ein gutes Dielektrikum, wie z.B. Keramik des Typs: Perovskite. dessen allgemeine chemische Formel lautet Ba (Ti$_{1 -x}$Zrx) 03. Der Durchmesser des Granulats beträgt zwischen 6-11 mm und dessen Dielektrizitätskonstante liegt zwischen 10.000 und 50.000. Mit dem gleichen oder einem ähnlichen Dielektrizitätskonstanten-Material sind auch die Entladungselektroden **5** und **6** und bipolaren Elektroden **15** beschichtet. Das Meerwasser wird durch Zufluß **17** in den Elektrolyseur **4** mittels einer Pumpe (in **Fig. 1** nicht dargestellt) eingeleitet. Pfeil **18** in **Fig. 2** zeigt die Flußrichtung des Meerwassers. Trinkwasserabfluß **12** ist an der Rückseite des Elektrolyseurs befestigt. An den Elektroden **5, 6** und an den bipolaren Elektroden **15** sind Öffnungen **19** vorhanden, durch die das Meerwasser fließt.

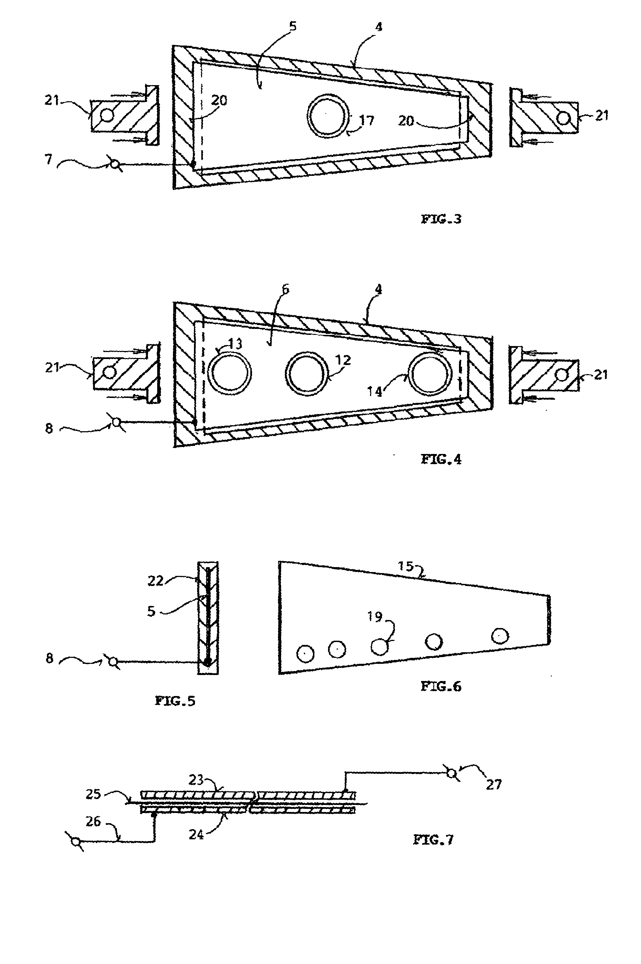

**Fig. 3** zeigt im Schnitt die Vorderansicht des Elektrolyseurs **4** mit der Entladungselektrode **5** und der Meerwasserzufuhr **17**. An den inneren Wänden **20** des Elektrolyseurs **4** ist die Entladungselektrode **5** befestigt und durch Anschluß **7** an Hochfrequenzgenerator **9** angeschlossen. Durch Befestigungsteile **21** ist der Elektrolyseur **4** an der Struktur des Elektromagneten EM befestigt.

**Fig 4** zeigt im Schnitt die Rückansicht des Elektrolyseurs **4**. Durch Abfluß **12** fließt das Trinkwasser und durch Abflüsse **13, 14** fließt das Salzkonzentrat aus dem Elektrolyseurs **4** heraus. Entladungselektrode **6** ist durch den elektrischen Anschluß **8** an Hochfrequenzgenerator **9** angeschlossen. Die anderen Symbole in **Fig. 4** sind dieselben wie in **Fig. 3.**

**Fig. 5** zeigt im Querschnitt eine Entladungselektrode **5**, die mit Dielektrikum **22** beschichtet ist Die Dielektrizitätskonstante soll zwischen 10.000 und 50.000 liegen. Über den elektrischen Anschluß **8** ist Entladungselektrode **5** an Hochfrequenzgenerator **9** angeschlossen.

**Fig. 6** zeigt in Seitenansicht eine bipolare Elektrode **15** mit den Öffnungen **19,** durch die das Meerwasser fließt. Die Metallplatte muß an der Oberfläche dünn und homogen mit dem keramischen Material mit hoher Dielektrizitätskonstante beschichtet sein. Dies zählt auch für die inneren Wände der Öffnungen **19**.

**Fig. 7** zeigt im Schnitt einen Bandkondensator, der im Prinzip aus zwei Metallfolien **23, 24** und Dielektrikum **25** besteht Wesentlich ist hierbei, daß ein elektrischer Anschluß **26** am Anfang der Metallfolie **24** und der zweite elektrische Anschluß **27** am Ende der Metallfolie **23** befestigt ist. Der Ladungs- und Entladungsstrom, den man auch wattlosen Strom nennt, fließt von Hochfrequenzgenerator **9** durch Anschluß **25** zur Metallfolie **24** und dann weiter als Verschiebungsstrom über Dielektrikum **25** durch Metallfolie **23** zum elektrischen Anschluß **27**, der ebenfalls an Hochfrequenzgenerator **9** angeschlossen ist. Das zählt für die erste halbe Periode des Wechselstromes. In der zweiten halben Periode wird der Bandkondensator entladen und die gesamte elektrische Ladung fließt zurück zum Hochfrequenzgenerator **9**. Gemäß dem Biot-Savartschen Gesetz erzeugt der wattlose Strom in den Wicklungen **2** **(Fig. 1)** ein Magnetfeld, das für die Entsalzung von Meerwasser gemäß der Erfindung die fundamentale physikalische Komponente ist in dem asymetrischen Spalt **3** des Elektromagneten EM **(Fig. 1)** ist ein nichthomogenes Magnetfeld. Auf Seite B in dem Luftspalt **3** ist die magnetische Feldstärke großer als auf Seite A. In einer solchen Anordnung kann man das Magnetfeld in dem Luftspalt mit beliebigen Frequenzen betreiben. Dies ist nicht möglich, wenn die Wicklungen **2** aus Draht gewickelt sind.

Das nachfolgende Beispiel zeigt einige Parameter für die Herstellung des Bandkondensators: Die Metallfolien **23, 24** **(Fig. 7)** sind aus Kupfer mit einer Dicke von 0,2 mm. Die Breite der Metallfolien **23**, 24 beträgt 35 mm. Dielektrikum **25** hat mindestens die Zahl hundert.

Der Bandkondensator **(Fig. 1)** ist in der DE-OS 199 27 355 A1 als neuartiger Transformator beschrieben.

Durch die Wicklungen **2** in **(Fig. 1)** fließt kapazitiver Strom, der mit Gleichung [1] definiert ist:

$$I = V(2\Pi \cdot Hz \cdot C) \hspace{4cm} [1]$$

I = maxiamaler Strom
V = maximal Spannung
n = Ludolfsche Zahl
Hz = Frequenz
C = Kapazität

Der kapazitive Widerstand $X_{c}$, der als Blindwiderstand bezeichnet wird, ist bei hohen Frequenzen und bei großen Kapazitäten sehr klein und ist mit Gleichung [2] definiert

$$X_C = \frac{1}{2\pi \cdot Hz \cdot C} \hspace{3cm} [2]$$

Dieser Widerstand entzieht dem Stromkreis keine Energie.

Die wesentlichen Komponenten, aus denen die vorliegende Vorrichtung zur elektromagnetischen Entsalzung von Meerwasser besteht, ist im obigen Text sowie in den sieben zeichnerischen Darstellungen ausführlich beschrieben. Von Wichtigkeit ist die Kinetik, welche die Trennung der Salzkomponente von der Trinkwasserkomponente regelt. Die Kinetik, die diese Trennung regelt, ist der magnetischen Suszeptibilität dertrennenden Komponente direkt proportional. Allerdings gilt diese Regel nur dann, wenn sich die zurTrennung vorgesehenen Teilchen im elektrischen Strom eines Elektrolyseurs befinden und wenn das senkrecht wirkende Magnetfeld einen starken Magnetfeldgradient aufweist. **Fig. 1** veranschaulicht, daß der Luftspalt 3 auf Seite B schmaler ist als auf Seite A. Durch diesen asymetrischen Luftspalt steigt der Magnetfeldgradient von Seite A zur Seite B. Gerade in diesem Magnetfeldgradienten werden die elektrisch geladenen Teilchen nach dem Prinzip der magnetischen Suszeptibilität in Richtung des steigenden Magnetfeldgradienten gezogen. Die an den Kationen und Anionen wirkende Kraft hatdie Dimension eines magnetischen Dipolmomentes pro Volumeneinheit. Die Suszeptibilität ist bei diamagnetischen, Substanzen negativ und bei paramagnetischen Substanzen positiv. Die Ansammlung von Teilchen und Ladungen von verschiedenen Kationen und Anionen in dem Elektrolyseur ist von der Zahl und der Polarität der Suszeptibilitätabhängig. Ein numerisches Beispiel zeigt die Suszeptibilität der wichtigsten Stoffe, die im Meerwasser vorhanden sind. Paramagnetische Stoffe:

Na = +16, Mg = +13,1, K = +20,8 , Ca = +40, Mn = +529, Fe = ferro, Br = +869, Sr = +92, U = +440, Pu = Pu + 610, Rb = +17, Mo = +89, Ba = +20,6, Li = +14,2.

Diamagnetische Stoffe:

B = –6,7, C = –6,0, Si = –3,9, S = –15, Cl = –40,5, Au = –34, $H_2O$ = –12,97, Zn = –7,8, P = –26,3.

Die paramagnetischen, elektrisch geladenen Teilchen werden in dem Magnetfeldgradient zur Seite **B** des Elektrolyseurs **4** gezogen und die diamagnetischen Teilchen werden zur Seite A gedrückt. Dieses physikalische Phänomen regelt den Wirkungsgrad der hier beschriebenen Vorrichtung.

Der Hochfrequenzgenerator **9 (Fig. 1)** liefert in den elektromagnetischen Schaltkreis Wechselstrom mit einer Frequenz zwischen 50 Hz und mehreren Megahertz. Eine zweite technische Alternative ist die, daß der Generator **9** in den Schaltkreis Hochfrequenz-Monopolarimpulse liefert. Die Monpolarimpulse polarisieren die mit Dielektrikum beschichteten Elektroden 5, 6, 15 in eine Richtung, was für die chemische Industrie und für die Pharmaindustrie von wirtschaftlicher Bedeutung ist.

Die vorliegende Vorrichtung findet eine breite Anwendung in der Wirtschaft und ist in den folgenden Fachgebieten nutzbar:

- Trennung von Metallen in flüssigen Lösungen.
- Bei der Aufbereitung von Brennstäben im Kernreaktorzyklus und zwar bei der Trennung von Spaltprodukten, wie z.B. Plutonium, dessen Suszeptibilität +610 ist.
- Zur Gewinnung von Natururan im Meerwasser.
- Bei der Beschleunigung von chemischen Synthesen In der Pharmaindustrie und sogar in der organischen Chemie.

Die hier beschriebene Vorrichtung besteht aus einer Einheit, die Trinkwasser in einer Größenordnung von 1.000 1/Std. aus Meerwasser separiert. Große Anlagen werden aus einer Mehrzahl solcher Einheiten zusammengebaut und an geeigneten Orten betrieben. Die Betriebkosten sind im Vergleich zum Stand der Technik unter 20% gesunken, aus welchem Grund die vorliegende Vorrichtung zum elektromagnetischen Entsalzen von Meerwasser wirtschaftlich vorteilhaft ist.

**Patentansprüche**

1.  Vorrichtung zum Entsalzen von Meerwasser als Elektrolyt, der in einem Elektrolyseur **(4)** eingeführt ist, in dem mit Wechselstrom bestromte Elektroden **(5, 6)** und bipolare Elektroden **(15)** versehen sind und daß der Elektrolyseur in einem Luftspalt **(3)** eines Elektromagneten angeordnet ist und daß der Elektromagnet mit einem frequenzgleichen Wechselstrom bestromt wird und damit die Ionen des Elektrolyts von der Trinkwasserkomponente getrennt sind **dadurch gekennzeichnet, daß** in dem Magnetkern **(1)** eines Elektromagneten (EM) asymetrischer Luftspalt **(3)** angeordnet ist, in dem ein Magnetfeldgradient vorhanden ist und daß in dem asymetrischen Luftspalt **(3)** mindestens ein Elektrolyseur **(4)** befestigt ist, in dem zwei gegenüberpositionierte und mit Dielektrikum beschichtete Entladungselektroden **(5, 6)** angeordnet sind und daß der Raum zwischen den Entladungselektroden **(5, 6)** mit Granulat **(16)**, das aus dielektrischem Material besteht, ausgefüllt ist und daß die salzhaltige Lösung zwischen dem Granulat **(16)** und parallel mit der Längsachse des Elektrolyseurs (4) fließt.

2.  Vorrichtung nach Anspruch 1. **dadurch gekennzeichnet, daß** in dem Elektrolyseur **(4)** zwischen den Entladungselektroden **(5, 6)** mindestens eine mit Dielektrikum beschichtete bipolare Elektrode **(15)** angeordnet ist

3.  Vorrichtung nach Anspruch 1, **dadurch gekennzeichnet, daß** den Entladungselektroden **(5, 6)** und den Bandkondensatorwicklungen **(2)** monopolare elektrische Impulse zugeführt werden.

4.  Vorrichtung nach Anspruch 1, **dadurch gekennzeichnet, daß** zur Verhinderung einer katodischen und anodischen Abscheidung von festen Substanzen an den Entladungselektroden **(5, 6)** und bipolaren Elektroden **(15)** die dielektrische Beschichtung **(22)** aus chemisch neutralem Material ist

5.  Vorrichtung nach Anspruch 1, **dadurch gekennzeichnet, daß** die elektrische Kapazität der Wicklungen **(2)**, die aus Bandkondensator ausgebildet sind, so bestimmt ist, daß sie größer ist als die elektrische Kapazität des Elektrolyseurs **(4)**.

6. Vorrichtung nach Anspruch 1, **dadurch gekennzeichnet, daß** die Position der Trinkwasser-Ablaufleitung **(12)** und die Salzkonzentral-Ablaufleitung **(13, 14)** nach der magnetischen Suzeptibilität so bestimmt ist, daß die Restkonzentration an Salz in der Trinkwasserkomponente die amtliche Norm erfüllt.

FIG.1

FIG.2

FIG.3

FIG.4

FIG.5

FIG.6

FIG.7

**Europäisches Patentamt**

## EUROPÄISCHER RECHERCHENBERICHT

Nummer der Anmeldung

EP 07 01 4065

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| D,X | WO 2006/039873 A (SCHENK DETLEF [DE]; IMRIS PAVEL [DE]) 20. April 2006 (2006-04-20) | 1,2,4,6 | INV. C02F1/46 C02F1/48 |
| Y | * Anspruch 1 * | 3,5 | |
| | ----- | | ADD. |
| X,D | DE 20 2004 015611 U1 (IMRIS PAVEL [DE]; SCHENK DETLEF [DE]) 30. Dezember 2004 (2004-12-30) | 1,2,4,6 | C02F103/08 |
| Y | * Absätze [0004], [0005], [0016] - [0020]; Abbildungen 1-7 * | 3,5 | |
| | ----- | | |
| X,D | EP 0 065 490 A (JENOPTIK JENA GMBH [DD]; ZEISS JENA VEB CARL [DD]) 24. November 1982 (1982-11-24) | 1,2,4,6 | |
| Y | * Seite 1, Zeile 1 - Zeile 9; Abbildung * * Seite 5, Zeile 11 - Zeile 32 * * Seite 6, Zeile 3 - Zeile 19 * * Seite 6, Zeile 29 - Seite 7, Zeile 33 * | 3,5 | |
| | ----- | | |
| A,D | US 3 207 684 A (DOTTS JR WALTER M) 21. September 1965 (1965-09-21) * Spalte 3, Zeile 3 - Zeile 41; Abbildung 4 * | 1,2,4,6 | |
| | ----- | | **RECHERCHIERTE SACHGEBIETE (IPC)** |
| A | WO 97/23285 A (PHILIPS ELECTRONICS NV [NL]; PHILIPS NORDEN AB [SE]) 3. Juli 1997 (1997-07-03) * Seite 3, Zeile 6 - Zeile 17; Abbildungen 1,2a,2b,5a * * Seite 6, Zeile 32 - Seite 7, Zeile 29 * * Seite 8, Zeile 29 - Seite 9, Zeile 7 * * Seite 11, Zeile 18 - Seite 12, Zeile 13 * | 1 | C02F B03C B01D H01F |
| | ----- | | |
| A | GB 1 560 730 A (EINHELL HANS GMBH) 6. Februar 1980 (1980-02-06) * Seite 3, Zeile 100 - Zeile 103 * * Anspruch 1 * | 1 | |
| | ----- | | |
| | -/-- | | |

Der vorliegende Recherchenbericht wurde für alle Patentansprüche erstellt

| Recherchenort | Abschlußdatum der Recherche | Prüfer |
|---|---|---|
| München | 24. Oktober 2007 | Beckmann, Oliver |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
...........................................................................
& : Mitglied der gleichen Patentfamilie, übereinstimmendes Dokument

EPO FORM 1503 03.82 (P04C03)

**Europäisches Patentamt**

**EUROPÄISCHER RECHERCHENBERICHT**

Nummer der Anmeldung

EP 07 01 4065

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | JP 2002 001391 A (KURITA WATER IND LTD) 8. Januar 2002 (2002-01-08) * Zusammenfassung; Abbildung 1 * ----- | 1 | |
| A | US 4 663 029 A (KELLAND DAVID R [US] ET AL) 5. Mai 1987 (1987-05-05) * Spalte 4, Zeile 24 - Spalte 5, Zeile 30; Abbildungen 1-4 * ----- | 1 | |
| A | FUH C B ET AL: "Magnetic split-flow thin fractionation: new technique for separation of magnetically susceptible particles" JOURNAL OF CHROMATOGRAPHY A, ELSEVIER, AMSTERDAM, NL, Bd. 813, Nr. 2, 17. Juli 1998 (1998-07-17), Seiten 313-324, XP004129411 ISSN: 0021-9673 * das ganze Dokument * ----- | 1 | |
| | | | RECHERCHIERTE SACHGEBIETE (IPC) |
| A | TAKAYASU M ET AL: "DYNAMIC MAGNETIC SEPARATION BY A MAGNETIC SUSCEPTIBILITY DISTRIBUTION" IEEE TRANSACTIONS ON MAGNETICS, IEEE SERVICE CENTER, NEW YORK, NY, US, Bd. MAG-20, Nr. 5, PART 1, September 1984 (1984-09), Seiten 1183-1185, XP002026029 ISSN: 0018-9464 * das ganze Dokument * ----- | 1 | |
| Y | DE 203 17 795 U1 (IMRIS PAVEL [DE]; IWANEK GUENTER [DE]) 26. Februar 2004 (2004-02-26) * Absätze [0005], [0011] - [0017]; Abbildungen 1,2 * ----- | 3,5 | |

-/--

Der vorliegende Recherchenbericht wurde für alle Patentansprüche erstellt

| Recherchenort | Abschlußdatum der Recherche | Prüfer |
|---|---|---|
| München | 24. Oktober 2007 | Beckmann, Oliver |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.......................................................................
& : Mitglied der gleichen Patentfamilie, übereinstimmendes Dokument

EPO FORM 1503 03.82 (P04C03)

**Europäisches Patentamt**

**EUROPÄISCHER RECHERCHENBERICHT**

Nummer der Anmeldung

EP 07 01 4065

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | DE 199 27 355 A1 (IMRIS PAVEL [DE]) 21. Dezember 2000 (2000-12-21) * Seite 2, Zeile 42 - Zeile 47; Abbildungen 1-4 * * Seite 2, Zeile 56 - Zeile 60 * ----- | 3,5 | |

RECHERCHIERTE SACHGEBIETE (IPC)

Der vorliegende Recherchenbericht wurde für alle Patentansprüche erstellt

| Recherchenort | Abschlußdatum der Recherche | Prüfer |
|---|---|---|
| München | 24. Oktober 2007 | Beckmann, Oliver |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

........................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 07 01 4065

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

24-10-2007

| Im Recherchenbericht angeführtes Patentdokument | Datum der Veröffentlichung | Mitglied(er) der Patentfamilie | Datum der Veröffentlichung |
|---|---|---|---|
| WO 2006039873 A | 20-04-2006 | DE 112004003032 A5<br>EP 1828060 A1 | 20-09-2007<br>05-09-2007 |
| DE 202004015611 U1 | 30-12-2004 | KEINE | |
| EP 0065490 A | 24-11-1982 | JP 1221000 C<br>JP 57197086 A<br>JP 58050791 B | 26-07-1984<br>03-12-1982<br>12-11-1983 |
| US 3207684 A | 21-09-1965 | KEINE | |
| WO 9723285 A | 03-07-1997 | JP 2001507274 T<br>US 5766447 A | 05-06-2001<br>16-06-1998 |
| GB 1560730 A | 06-02-1980 | AT 353707 B<br>AT 450976 A<br>AU 504005 B2<br>AU 1528376 A<br>BR 7604451 A<br>CA 1090292 A1<br>CH 598138 A5<br>DK 320376 A<br>ES 449887 A1<br>FR 2318115 A1<br>IL 49852 A<br>IN 143282 A1<br>JP 52012752 A<br>MX 143221 A<br>NL 7607843 A<br>NO 762273 A<br>SE 7607833 A | 26-11-1979<br>15-04-1979<br>27-09-1979<br>05-01-1978<br>26-07-1977<br>25-11-1980<br>28-04-1978<br>17-01-1977<br>16-08-1977<br>11-02-1977<br>31-07-1980<br>29-10-1977<br>31-01-1977<br>03-04-1981<br>18-01-1977<br>18-01-1977<br>17-01-1977 |
| JP 2002001391 A | 08-01-2002 | KEINE | |
| US 4663029 A | 05-05-1987 | KEINE | |
| DE 20317795 U1 | 26-02-2004 | KEINE | |
| DE 19927355 A1 | 21-12-2000 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0065490 A
- EP 0065489 A
- US 3207684 A
- DE 3521109 A1
- WO 2004033086 A1
- WO 2006039873 A1
- DE GM202004015611 U1
- DE 19927355 A1